# FASCICULE DE BREVET EUROPEEN

(11) **EP 2 735 969 B1**
(45) Date de publication et mention de la délivrance du brevet: **04.09.2019**
(21) Numéro de dépôt: 13194032.2
(22) Date de dépôt: 22.11.2013
(51) Int. Cl.: G06F 11/28

(54) **Ensemble électronique comprenant un module de desactivation**
Elektronische Einheit, die ein Deaktivierungsmodul umfasst
Electronic assembly including a deactivation module

(30) Priorité: 27.11.2012 FR 1261301
(43) Date de publication de la demande: 28.05.2014
(73) Titulaire: IDEMIA France, 92700 Colombes (FR)
(72) Inventeur: Bousquet, Nicolas, 92700 Colombes (FR); Sierra, Yannick, 92700 Colombes (FR)
(74) Mandataire: Lefevre-Groboillot, David André

(56) Documents cités:
- WO-A1-01/27770
- WO-A1-2008/017796
- US-A1- 2005 186 954
- US-A1- 2007 118 558

## Description

### Arrière-plan de l'invention

La présente invention se situe dans le domaine de la sécurisation des dispositifs électroniques, par exemple des terminaux ou encore des cartes à puce, comportant plusieurs environnements d'exécution, dont au moins un est un environnement d'exécution de confiance et un autre un environnement d'exécution polyvalent.

L'environnement d'exécution de confiance est mis en oeuvre à l'aide d'un processeur sécurisé, qui peut être un processeur dédié à cette tâche, ou avoir d'autres fonctions, et d'une mémoire non-volatile réinscriptible sécurisée, et est basé sur un système d'exploitation de confiance. Ainsi des applications sous la dépendance du système d'exploitation de confiance proviennent de sources de confiance, ou certifiées, dont l'utilisateur du terminal n'a pas le contrôle.

De manière similaire, l'environnement d'exécution polyvalent est basé sur un système d'exploitation polyvalent, permettant d'exécuter des applications d'origines diverses telle que l'Internet.

Ces deux systèmes d'exploitation peuvent s'exécuter par exemple sur un même chipset du terminal.

En outre, le système d'exploitation de confiance dispose d'un mécanisme de démarrage sécurisé qui vérifie que le dispositif électronique démarre dans un état de confiance, en vérifiant l'intégrité du code exécuté sur le dispositif électronique, notamment le code du système d'exploitation de confiance. Le système d'exploitation de confiance démarre alors qu'aucun autre système d'exploitation n'a démarré préalablement.

Lorsque le système d'exploitation polyvalent est corrompu, la sécurité des données du terminal n'est plus garantie. Pour résoudre ce problème, on connait la désactivation complète du système d'exploitation polyvalent. Toutefois, cette solution n'est pas confortable pour l'utilisateur humain puisque celui-ci ne pourra plus utiliser son terminal, ce qui n'est pas souhaitable, notamment en cas d'urgence (appel d'un numéro d'urgence impossible).

D'autre part, on connaît des dispositifs électroniques comprenant des éléments sécurisés (« secure element » en anglais), comme par exemple une carte SIM (UICC) qui est un élément sécurisé amovible, ou au contraire un élément embarqué eSE.

Les documents WO 01/27770 et US 2005/186954 décrivent respectivement un élément sécurisé et une méthode de désactivation de fonctionnalité selon la technique antérieure.

Le document US 2002/0186845 propose un système de désactivation de l'accès à un élément sécurisé d'un terminal, via l'envoi d'un message de blocage par radio, permettant toutefois l'utilisation de certaines fonctions du terminal, fonctionnant alors dans un mode dégradé.

Toutefois, dans la solution divulguée par ce document, la tâche de signalement d'une anomalie de sécurité revient à l'utilisateur du terminal et la sécurisation du terminal ne se produit que dans la mesure où l'utilisateur la demande. Ainsi, lorsque le terminal rencontre une anomalie de sécurité transparente pour l'utilisateur, c'est-à-dire passant inaperçue, la sécurisation du terminal ne se fait pas. Par ailleurs, la solution proposée dans le document précité nécessite de pouvoir recevoir un signal radio. Ainsi dans le cas où l'utilisateur utiliserait son terminal avec une connexion au réseau insuffisante (par exemple trou de réseau ou réseau défaillant) voire inexistante (par exemple en mode avion), la sécurisation du terminal ne pourrait avoir lieu.

Par conséquent, il existe un besoin d'améliorer les procédés de sécurisation de dispositifs électroniques existants.

### Objet et résumé de l'invention

Dans ce qui suit, l'expression "mode de réalisation" doit être comprise comme "exemple" sauf si elle correspond à une combinaison de caractéristiques entièrement définie dans les revendications. La présente invention vise principalement à résoudre les inconvénients précités.

A cet effet, l'invention concerne un ensemble électronique pour dispositif électronique selon la revendication 1.

L'invention concerne également un procédé de sécurisation d'un dispositif électronique selon la revendication 9.

De surcroit, l'invention concerne également un terminal comportant un ensemble électronique tel que précité. Ce terminal peut être par exemple un téléphone mobile, mais aussi une tablette tactile, ou un ordinateur portable. En variante, le terminal peut être un système intelligent autonome ou embarqué, largement utilisé dans le cadre d'architectures de type machine-to-machine, comme par exemple l'ordinateur de bord d'un véhicule.

En variante il peut s'agir d'une carte à puce.

Ainsi, l'invention permet à un utilisateur d'un dispositif de l'utiliser de manière sécurisée, d'une part parce que l'invention prévoit la sécurisation du dispositif lorsqu'une anomalie de sécurité est détectée et d'autre part car la sécurisation du dispositif permet toutefois à l'utilisateur d'utiliser certaines fonctions de son dispositif, fonctionnant alors dans un mode dégradé. Le procédé, parce qu'il est mis en oeuvre sous la dépendance du système d'exploitation de confiance, permet d'utiliser le dispositif précité en toute sécurité et de façon fiable. En effet, dans la solution proposée dans l'art antérieur (US 2002/0186845), la sécurité du dispositif repose sur la vigilance de l'utilisateur quant aux éventuelles anomalies de sécurité auxquelles est confronté le dispositif, au contraire la présente invention confie la sécurité du dispositif directement au système d'exploitation de confiance et à ses applications.

Ainsi la sécurisation du dispositif électronique se fait de sorte que des fonctions non sécurisées sont encore disponibles.

Par exemple dans le cas d'un terminal de téléphonie mobile, l'utilisateur peut par exemple continuer à passer des appels avec son terminal, même si certaines fonctions sécurisées, par exemple de paiement, sont désactivées.

Dans un mode particulier de réalisation de l'invention, l'anomalie de sécurité est la corruption du système d'exploitation polyvalent.

La corruption du système d'exploitation polyvalent peut être automatiquement et/ou systématiquement détectée par un module de vérification d'intégrité.

La corruption du système d'exploitation polyvalent étant un phénomène nuisible et souvent invisible pour l'utilisateur du dispositif électronique, l'invention permet, dans ce mode de réalisation, de prendre les mesures de sécurité nécessaires pour néanmoins réduire cette nuisance.

Dans un autre mode de réalisation de l'invention, le module de constatation est apte à recevoir un message contenant une commande de sécurisation.

Ce mode de réalisation a l'avantage de pouvoir être initié à distance. Il est par exemple particulièrement avantageux pour sécuriser un dispositif électronique volé ou perdu.

Dans un mode particulier de réalisation de l'invention, le module de désactivation est apte à envoyer une instruction de désactivation de l'application, à cette application, et à attendre un acquittement de la désactivation de cette application. Le système d'exploitation de confiance prend les mesures nécessaires pour assurer la sécurité du dispositif électronique lorsque l'acquittement est négatif.

Ainsi, en cas d'échec de la désactivation, le système d'exploitation de confiance peut prendre les mesures nécessaires pour toutefois assurer la sécurité du dispositif électronique.

Dans un mode particulier de réalisation de l'invention, le module de constatation s'active en réaction à la vérification de la sécurité du dispositif électronique, laquelle est déclenchée :
à l'initiative du système d'exploitation de confiance, au démarrage du dispositif électronique ou à intervalles réguliers ; ou
à l'initiative d'un utilisateur du dispositif électronique.

Un avantage de ce mode de réalisation est que la sécurisation du dispositif électronique se fait de façon automatique du point de vue de l'utilisateur, lorsque la vérification est effectuée à l'initiative du système d'exploitation de confiance.

Un autre avantage de ce mode est que l'utilisateur du dispositif électronique, lorsqu'il a un doute sur la sécurité de son dispositif électronique, peut également initier une vérification. Cet avantage est particulièrement intéressant lorsque l'utilisateur s'est fait voler ou a perdu son dispositif électronique, ou bien lorsqu'il a effectué des opérations vulnérabilisant son terminal comme par exemple le téléchargement d'une application douteuse.

Dans un mode particulier de réalisation de l'invention, les étapes du procédé précité sont déterminées par les instructions d'un programme d'ordinateur.

En conséquence, l'invention vise aussi un programme d'ordinateur comportant des instructions pour la mise en oeuvre des étapes du procédé tel que décrit ci-dessus, lorsque le programme est exécuté par un processeur.
Ce programme peut utiliser n'importe quel langage de programmation, par exemple sous la forme de code source ou de code objet. Le programme peut être compilé et/ou interprété ou dans n'importe quelle autre forme interprétable par un processeur.

Dans un mode particulier de réalisation de l'invention, ce programme d'ordinateur est le système d'exploitation de confiance.

Dans un autre mode de réalisation de l'invention, ce programme d'ordinateur est une extension (« patch » en anglais) du système d'exploitation de confiance. Cette extension a pour intérêt d'enrichir les API existantes, et constitue une alternative à une application native du système d'exploitation de confiance lorsqu'une telle application n'est pas à même de proposer certains services lorsqu'elle est déployée, ou à une application native qui ne pourrait pas être déployée. Une telle extension propose donc des fonctionnalités supplémentaires initialement non proposées par le système d'exploitation de confiance.

L'invention vise aussi un support d'information lisible par un ordinateur et comportant les instructions d'un programme d'ordinateur tel que mentionné ci-dessus.

Ce support d'information peut être n'importe quelle entité ou dispositif, embarqué ou amovible, capable de stocker le programme. Par exemple, le support peut être un moyen de stockage tel qu'une mémoire ROM, un CDROM ou une ROM de circuit micro-électronique ou encore un moyen d'enregistrement magnétique par exemple un disque dur, ou une mémoire de type flash ou RAM.

D'autre part, le support d'information peut être un support transmissible tel qu'un signal électrique ou optique qui peut être acheminé via un câble électrique ou optique, par radio ou par d'autres moyens. Le programme selon l'invention peut être en particulier téléchargé dans un espace de stockage en ligne ou sur une plateforme Internet.

Alternativement, le support d'information peut être un circuit intégré dans lequel le programme d'ordinateur est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures:
- la figure 1 représente schématiquement un dispositif électronique selon un mode de réalisation de l'invention ;
- la figure 2 représente schématiquement un procédé selon un mode de réalisation particulier de l'invention ;
- la figure 3 représente schématiquement un scénario d'utilisation du procédé selon le mode de réalisation de l'invention de la figure 2 ;
- la figure 4 représente sous forme d'organigramme un procédé selon un autre mode de réalisation de l'invention.

### Description détaillée de l'invention

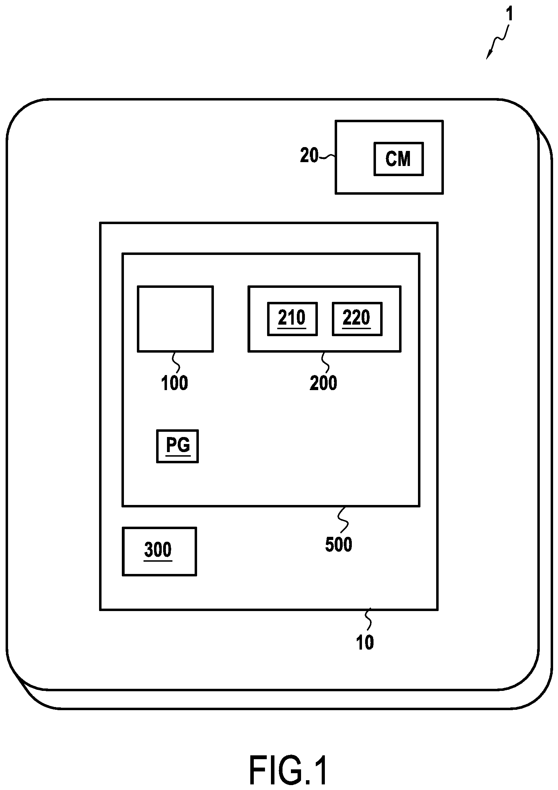

La **figure 1** représente un dispositif électronique 1 selon un mode de réalisation de l'invention. Dans cet exemple, le dispositif électronique est un terminal, par exemple une tablette tactile, un ordinateur portable, ou un téléphone mobile.

En variante il aurait pu s'agir d'un dispositif de type machine-to-machine comme par exemple l'ordinateur de bord d'un véhicule, ou encore d'une carte à puce comme par exemple une carte bancaire ou un document d'identité électronique.

Dans l'exemple de la figure 1, le terminal comprend un ensemble électronique 10 conforme à l'invention et un élément sécurisé 20.

Dans cet exemple, l'ensemble électronique 10 comporte lui-même un processeur 300 et une mémoire 500 dans laquelle est stocké notamment le code de deux systèmes d'exploitation, à savoir celui d'un système d'exploitation polyvalent référencé 100 et celui d'un système d'exploitation de confiance référencé 200.

Ces deux systèmes d'exploitation sont démarrés de manière conjointe, au démarrage du terminal 1. En effet, de façon connue de l'homme du métier, l'environnement d'exécution sécurisé du système d'exploitation de confiance 200 dispose d'un mécanisme de démarrage sécurisé (« Secure Boot » en anglais) qui consiste à authentifier le système d'exploitation de confiance 200, puis à l'initialiser, c'est-à-dire à le lancer, puis à démarrer le système d'exploitation polyvalent 100.

Plus précisément, le Secure Boot est une chaîne d'étapes amenant au démarrage complet du terminal, chaque étape validant la suivante. Ainsi l'étape i+1 n'est déclenchée que si l'étape i valide la transition.

Toutefois, le fonctionnement actif, par opposition à la veille, de chacun des systèmes d'exploitation est exclusif. C'est-à-dire que lorsqu'un des systèmes d'exploitation est actif, l'autre est en mode inactif.

Dans cet exemple, le système d'exploitation de confiance 200 comporte un module de constatation d'une anomalie de sécurité référencé 210 et un module de désactivation 220. Lorsque le système d'exploitation de confiance détecte une anomalie de sécurité grâce au module 210, le module de désactivation 220 est à son tour exécuté.

D'autre part, l'élément sécurisé peut être une carte à puce connectée au terminal par un lecteur, par exemple une carte SIM, ou encore un circuit intégré dont les pattes de connexion sont connectées au terminal comme par exemple un eSE.

De manière générale, un élément sécurisé répond aux critères de sécurité Critères Communs selon la norme ISO/CEI 15408, ISO 7816 et/ou au standard FIPS 140, et stocke des informations et des applications sensibles comme par exemple des applications dédiées au paiement sans contact par NFC (« Near Field Communication » en anglais). Dans cet exemple, l'élément sécurisé 20 est une carte SIM permettant au terminal de communiquer notamment via un réseau mobile. Le système d'exploitation de confiance 200 peut accéder directement, c'est-à-dire sans mobiliser le système d'exploitation polyvalent, aux applications stockées dans la carte SIM 20. Cette carte SIM 20 comprend un composant CM chargé de la gestion des applications (« Card Manager » en anglais) stockées dans la carte SIM 20. Ce composant de gestion CM peut être une application de la carte SIM 20. Il réalise en particulier le routage des trames de type APDU conformes au standard ISO 7816.

Ainsi, lorsqu'une anomalie de sécurité est détectée, et que le système d'exploitation de confiance, grâce au module de désactivation 220 envoie une instruction de désactivation visant à désactiver par exemple toutes les applications d'un type spécifique, par exemple des applications dédiées au paiement, le composant de gestion CM route l'instruction de désactivation vers les différentes applications concernées, à savoir dans cet exemple précis les applications dédiées au paiement.

Dans cet exemple, seule la désactivation de fonctions sécurisées de la carte SIM 20 a été décrite. Toutefois, l'invention concerne aussi la sécurisation d'un terminal comportant plusieurs éléments sécurisés, contenant chacun des fonctions sécurisées à désactiver. Dans cette configuration, une liste de ces éléments sécurisés et de leurs applications est mémorisée dans une mémoire non-volatile contrôlée par le système d'exploitation de confiance 200.

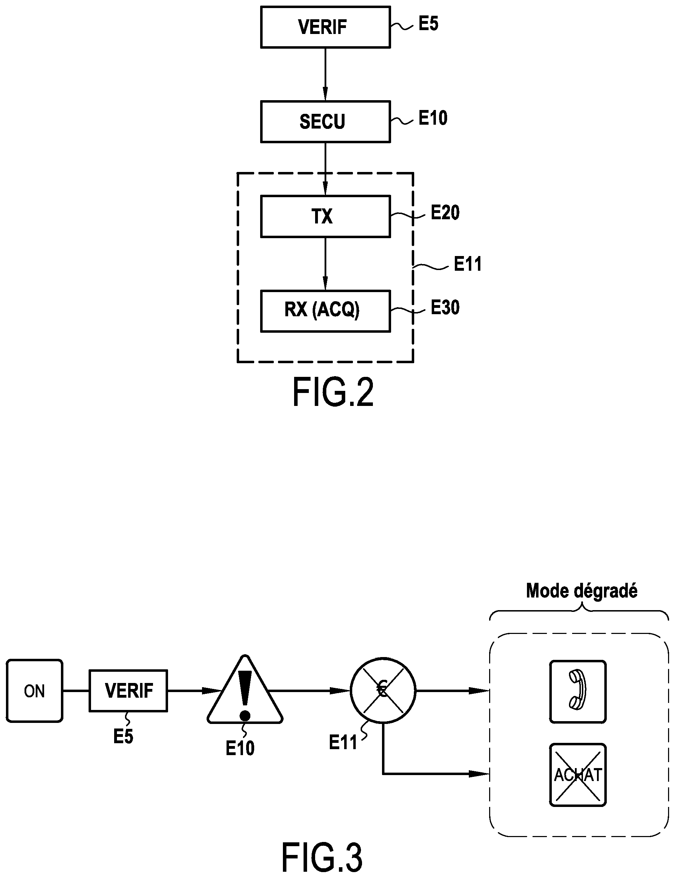

La **figure 2** représente les principales étapes d'un procédé selon un mode de réalisation particulier de l'invention, pouvant être mis en oeuvre sous la dépendance d'un système d'exploitation de confiance 200 dans un terminal 1 tel que décrit précédemment en référence à la figure 1.

Au cours d'une étape E5, une application particulière du système d'exploitation de confiance vérifie l'intégrité du système d'exploitation polyvalent.

Dans cet exemple, le procédé est mis en oeuvre à l'initiative du système d'exploitation de confiance 200, au démarrage sécurisé du terminal 1 tel que décrit ci-dessus.

En variante, le procédé aurait pu être mis en oeuvre à l'initiative du système d'exploitation de confiance 200 de manière régulière à l'aide d'une horloge ou bien à l'initiative de l'utilisateur du terminal 1, ou encore sur réception d'une commande (« polling » en anglais).

De façon connue de l'homme du métier, la vérification de l'intégrité d'un système d'exploitation consiste à calculer à la volée l'empreinte d'une série spécifique d'octets de chaque niveau de ce système (par exemple le noyau, les librairies natives, l'environnement d'exécution, les applications), puis à comparer cette empreinte avec une empreinte de référence par exemple en appliquant l'algorithme SHA-1 bien connu de l'homme du métier.

A l'étape E10, l'application particulière chargée de vérifier l'intégrité du système d'exploitation polyvalent constate que celui-ci est corrompu.

En pratique, lorsqu'une telle corruption est avérée, une information relatant l'anomalie de sécurité est mémorisée dans une mémoire non-volatile contrôlée par le système d'exploitation de confiance 200, de sorte qu'une application particulière de ce système d'exploitation 200, capable de lire cette information, met en oeuvre l'étape de désactivation E11 d'au moins une fonction sécurisée du terminal.

Dans le cas particulier où le terminal comprendrait plusieurs éléments sécurisés dont la liste est mémorisée dans une mémoire non-volatile contrôlée par le système d'exploitation de confiance 200, une application particulière de ce système d'exploitation 200 lit la liste et procède à l'étape de désactivation E11 pour chaque application à désactiver de chaque élément sécurisé de la liste.

De retour à la figure 2, l'étape de désactivation E11 comprend une étape d'envoi E20 d'une instruction de désactivation, dans cet exemple, directement à une application sensible de la carte SIM 20 et une étape d'attente E30 d'un acquittement ACQ provenant de l'application en question.

Les communications (envoi et réception de l'instruction, de l'acquittement) se font par exemple selon le protocole APDU conformément à la norme ISO 7816.

La **figure 3** illustre de manière schématique un scénario d'utilisation intégrant le procédé selon le mode de réalisation décrit précédemment en référence à la figure 2.

Dans ce scénario, l'utilisateur allume son terminal 1. Au cours d'une étape E5, une application particulière du système d'exploitation de confiance vérifie l'intégrité du système d'exploitation polyvalent.

Le système d'exploitation de confiance constate que le système d'exploitation polyvalent est corrompu (étape E10) et procède à la désactivation (étape E11) des applications de paiement de la carte SIM 20 et de l'accès aux clefs cryptographiques présentes sur la carte SIM 20. Les applications du système d'exploitation polyvalent utilisant des applications de paiement présentes sur la carte SIM 20, par exemple des applications de commerce électronique ou d'achat, sont alors toujours accessibles par l'utilisateur du terminal 1, toutefois les actions de paiement utilisant les applications de la carte SIM ou des clefs cryptographiques ne sont plus possibles.

Dans cet exemple, ces applications du système d'exploitation polyvalent ont accès directement à la carte SIM 20. Ultérieurement, l'utilisateur utilise son terminal 1 pour passer un appel via le réseau mobile. Cet appel peut avoir lieu puisque seules les applications sécurisées de paiement stockées sur la carte SIM 20 sont bloquées. L'utilisateur ne peut en revanche plus utiliser de manière complète les applications d'achat et de commerce électronique. Cette utilisation partielle du terminal est qualifiée de mode dégradé.

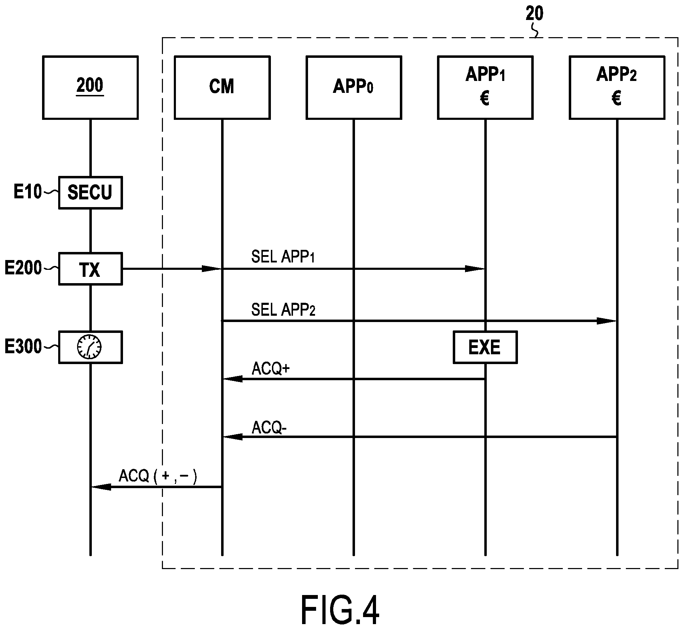

La **figure 4** représente les principales étapes d'un procédé selon un autre mode de réalisation de l'invention, pouvant également être mis en oeuvre par un système d'exploitation de confiance 200 dans un terminal 1 tel que décrit précédemment en référence à la figure 1.

En outre, dans cet exemple, la carte SIM comprend trois applications APP₀, APP₁ et APP₂, ces deux dernières étant des applications de paiement.

A l'étape E10, le système d'exploitation de confiance 200 reçoit un message comprenant une commande de désactivation des applications de paiement stockées sur la carte SIM 20.

A l'étape E200, il envoie une instruction de désactivation des applications de paiement au composant de gestion CM qui :
- ne sélectionne pas l'application APP₀ puisqu'il ne s'agit pas d'une application de paiement,
- sélectionne l'application APP₁ et l'application APP₂, toutes deux dédiées au paiement.

En pratique, l'instruction de désactivation se présente sous la forme d'une trame APDU et le composant de gestion CM procède à la sélection des applications selon leur identifiant unique AID (« Application IDendifier » en anglais), conformément à la norme ISO 7816.

Le composant de gestion transmet donc la trame APDU contenant l'instruction de désactivation aux applications sélectionnées, à savoir APP₁ et APP₂.

L'application APP₁ exécute avec succès la désactivation et renvoie un acquittement positif ACQ+ tandis que la désactivation de l'application APP₂ échoue, d'où le renvoi d'un acquittement négatif ACQ -.

Dans cet exemple, le composant de gestion CM fait la synthèse des acquittements et renvoie un acquittement global AQC (+,-) sous forme également d'une trame APDU au système d'exploitation de confiance, mettant fin à l'étape d'attente E300 de l'acquittement.

Dans cet exemple, comme évoqué précédemment, les applications du système d'exploitation polyvalent ont accès à la carte SIM 20 sans obligatoirement mobiliser le système d'exploitation de confiance.

En variante, le système d'exploitation de confiance pourrait être un intermédiaire systématique entre le système d'exploitation polyvalent et l'élément sécurisé c'est-à-dire la carte SIM 20.

L'étape de désactivation de fonctions sécurisées de la carte SIM 20 pourrait alors consister à intégrer un composant de gestion des communications (« Secure Element Access Contrôler » en anglais) dans le système d'exploitation de confiance. Ce composant agit comme un filtre et applique une politique de sécurité prédéfinie. Lorsqu'une anomalie de sécurité est détectée, cette politique de sécurité peut par exemple bloquer les requêtes provenant du système d'exploitation polyvalent visant à accéder à des fonctions sécurisées par l'intermédiaire du système d'exploitation de confiance.

## Revendications

1. Ensemble électronique (10) pour dispositif électronique (1), ledit ensemble électronique (10) comprenant plusieurs environnements d'exécution dont au moins un est un environnement dit de confiance et au moins un autre est un environnement dit polyvalent,
l'environnement de confiance étant mis en oeuvre à l'aide d'un processeur sécurisé pouvant être un processeur dédié à cette tâche, ou avoir d'autres fonctions, et d'une mémoire non-volatile réinscriptible sécurisée, et basé sur un système d'exploitation de confiance,
l'environnement d'exécution polyvalent étant basé sur un système d'exploitation polyvalent, permettant d'exécuter des applications d'origines diverses telles que l'internet,
et comprenant :
un module de constatation (210) d'une anomalie de sécurité du système d'exploitation polyvalent (100) ; et
un module de désactivation (220) en réaction à ladite constatation, d'au moins une fonction sécurisée dudit dispositif électronique (1) utilisée par des applications du système d'exploitation polyvalent ;
ladite désactivation permettant cependant l'utilisation dudit dispositif électronique (1) dans un mode dégradé, ledit ensemble électronique étant **caractérisé en ce que** ces deux modules sont exécutés sous la dépendance du système d'exploitation de confiance, ledit système d'exploitation de confiance (200) et ledit système d'exploitation polyvalent (100) étant mémorisés dans une mémoire (500) dudit ensemble électronique s'exécutant sur ledit ensemble électronique (10),
ladite au moins une fonction sécurisée étant :
une application (APP₀ APP₁, APP₂) d'un élément sécurisé (20), exécutée par ledit dispositif électronique (1) ; ou
une fonction d'accès à au moins une donnée sensible d'un élément sécurisé (20), par exemple des clefs cryptographiques, ladite donnée sensible étant accessible par ledit dispositif électronique (1).

2. Ensemble électronique (10) selon la revendication 1, **caractérisé en ce que** ladite anomalie de sécurité est la corruption dudit système d'exploitation polyvalent (100).

3. Ensemble électronique (10) selon l'une quelconque des revendications 1 à 2, **caractérisé en ce que** ledit module de constatation (210) est apte à recevoir un message contenant une commande de sécurisation.

4. Ensemble électronique (10) selon la revendication 1, **caractérisé en ce que** ledit module de désactivation (220) est apte à :
envoyer une instruction de désactivation de ladite application (App), à ladite application (App) ; et
attendre un acquittement de la désactivation de ladite application (App) ;
ledit système d'exploitation de confiance prenant les mesures nécessaires pour assurer la sécurité dudit dispositif électronique lorsque ledit acquittement est négatif.

5. Ensemble électronique (10) selon l'une quelconque des revendications 1 à 4, **caractérisé en ce que** ledit module de constatation (210) s'active en réaction à la vérification (E5) de la sécurité du dispositif électronique (1), laquelle est déclenchée :
à l'initiative dudit système d'exploitation de confiance (200), au démarrage dudit dispositif électronique (1) ou à intervalles réguliers ; ou
à l'initiative d'un utilisateur dudit dispositif électronique (1).

6. Ensemble électronique (10) selon la revendication 1, dans lequel le module de constatation calcule à la volée l'empreinte d'une série spécifique d'octets de chaque niveau du système d'exploitation, puis compare cette empreinte avec une empreinte de référence.

7. Terminal (1) comportant un ensemble électronique (10) selon l'une quelconque des revendications 1 à 7.

8. Terminal (1) selon la revendication 7, **caractérisé en ce qu'**il est un terminal de téléphonie mobile.

9. Procédé de sécurisation d'un dispositif électronique (1) comprenant plusieurs environnements d'exécution dont au moins un est un environnement dit de confiance et au moins un autre est un environnement dit polyvalent,
l'environnement de confiance étant mis en oeuvre à l'aide d'un processeur sécurisé pouvant être un processeur dédié à cette tâche, ou avoir d'autres fonctions, et d'une mémoire non-volatile réinscriptible sécurisée, et basé sur un système d'exploitation de confiance,
l'environnement d'exécution polyvalent étant basé sur un système d'exploitation polyvalent, permettant d'exécuter des applications d'origines diverses telles que l'internet,
et comprenant, ledit procédé comprenant une étape de constatation (E10) d'une anomalie de sécurité du système d'exploitation polyvalent (100), et, en réaction à ladite étape de constatation, une étape de désactivation (E11) d'au moins une fonction sécurisée dudit dispositif électronique (1) utilisée par des applications du système d'exploitation polyvalent, ladite étape de désactivation permettant cependant l'utilisation dudit dispositif électronique (1) dans un mode dégradé, ledit procédé étant **caractérisé en ce qu'**il est mis en oeuvre sous la dépendance du système d'exploitation de confiance (200), ledit système d'exploitation de confiance (200) et ledit système d'exploitation polyvalent (100) s'exécutant sur ledit dispositif électronique,
ladite au moins une fonction sécurisée étant :
une application (App, App₁, App₂) d'un élément sécurisé (20), exécutée par ledit dispositif électronique (1) ; ou
une fonction d'accès à au moins une donnée sensible d'un élément sécurisé (20), par exemple des clefs cryptographiques, ladite donnée sensible étant accessible par ledit dispositif électronique (1).

10. Programme d'ordinateur (PG) comportant des instructions pour l'exécution du procédé selon la revendication 9 lorsque ledit programme est exécuté par un processeur (300).

11. Programme d'ordinateur (PG) selon la revendication 10, **caractérisé en ce qu'**il constitue ledit système d'exploitation de confiance.

12. Programme d'ordinateur (PG) selon la revendication 10, **caractérisé en ce qu'**il constitue une extension dudit système d'exploitation de confiance.

13. Programme d'ordinateur (PG) selon la revendication 10, **caractérisé en ce qu'**il constitue une application sous la dépendance dudit système d'exploitation de confiance.

14. Support d'enregistrement (500) lisible par un ordinateur sur lequel est enregistré un programme d'ordinateur comprenant des instructions pour l'exécution du procédé selon la revendication 9.

## Patentansprüche

1. Elektronische Anordnung (10) für eine elektronische Vorrichtung (1), wobei die elektronische Anordnung (10) mehrere Ausführungsumgebungen umfasst, von denen wenigstens eine eine sogenannte vertrauenswürdige Umgebung ist und wenigstens eine weitere eine sogenannte Mehrzweckumgebung ist,
wobei die vertrauenswürdige Umgebung mit Hilfe eines gesicherten Prozessors, der ein für diese Aufgabe bestimmter Prozessor sein kann oder andere Funktionen haben kann, und eines nichtflüchtigen, wiederbeschreibbaren gesicherten Speichers umgesetzt wird und auf einem vertrauenswürdigen Betriebssystem basiert,
wobei die Mehrzweckausführungsumgebung auf einem Mehrzweckbetriebssystem basiert, das ermöglicht, Anwendungen unterschiedlicher Herkünfte, wie dem Internet, auszuführen,
und umfassend:
ein Modul zum Feststellen (210) einer Sicherheitsanomalie des Mehrzweckbetriebssystems (100), und
ein Modul zum Deaktivieren (220), als Reaktion auf das Feststellen, wenigstens einer gesicherten Funktion der elektronischen Vorrichtung (1), die durch Anwendungen des Mehrzweckbetriebssystems verwendet wird,
wobei die Deaktivierung jedoch die Verwendung der elektronischen Vorrichtung (1) in einem Notlauf ermöglicht, wobei die elektronische Anordnung **dadurch gekennzeichnet ist, dass** diese beiden Module in Abhängigkeit des vertrauenswürdigen Betriebssystems ausgeführt werden, wobei das vertrauenswürdige Betriebssystem (200) und das Mehrzweckbetriebssystem (100), die in einem Speicher (500) der elektronischen Anordnung gespeichert sind, auf der elektronischen Anordnung (10) ausgeführt werden,
wobei die wenigstens eine gesicherte Funktion:
eine Anwendung (APP₀, APP₁, APP₂) eines gesicherten Elements (20) ist, die durch die elektronische Vorrichtung (1) ausgeführt wird, oder
eine Funktion zum Zugreifen auf wenigstens ein sensibles Datenelement eines gesicherten Elements (20), beispielsweise kryptographische Schlüssel, ist, wobei das sensible Datenelement über die elektronische Vorrichtung (1) zugänglich ist.

2. Elektronische Anordnung (10) nach Anspruch 1, **dadurch gekennzeichnet, dass** die Sicherheitsanomalie die Beschädigung des Mehrzweckbetriebssystems (100) ist.

3. Elektronische Anordnung (10) nach einem der Ansprüche 1 bis 2, **dadurch gekennzeichnet, dass** das Feststellungsmodul (210) geeignet ist, eine Nachricht, die einen Sicherungsbefehl enthält, zu empfangen.

4. Elektronische Anordnung (10) nach Anspruch 1, **dadurch gekennzeichnet, dass** das Deaktivierungsmodul (220) geeignet ist:
eine Anweisung zur Deaktivierung der Anwendung (App) an die Anwendung (App) zu senden, und
eine Bestätigung der Deaktivierung der Anwendung (App) abzuwarten,
wobei das vertrauenswürdige Betriebssystem die erforderlichen Maßnahmen ergreift, um die Sicherheit der elektronischen Vorrichtung zu gewährleisten, wenn die Bestätigung negativ ist.

5. Elektronische Anordnung (10) nach einem der Ansprüche 1 bis 4, **dadurch gekennzeichnet, dass** das Feststellungsmodul (210) als Reaktion auf die Überprüfung (E5) der Sicherheit der elektronischen Vorrichtung (1) aktiviert wird, welche ausgelöst wird:
auf Initiative des vertrauenswürdigen Betriebssystems (200), beim Start der elektronischen Vorrichtung (1) oder in regelmäßigen Abständen, oder
auf Initiative eines Benutzers der elektronischen Vorrichtung (1).

6. Elektronische Anordnung (10) nach Anspruch 1, wobei das Feststellungsmodul den Fingerabdruck einer spezifischen Reihe von Bytes jeder Ebene des Betriebssystems spontan berechnet, dann diesen Fingerabdruck mit einem Referenzfingerabdruck vergleicht.

7. Endgerät (1) mit einer elektronischen Anordnung (10) nach einem der Ansprüche 1 bis 7.

8. Endgerät (1) nach Anspruch 7, **dadurch gekennzeichnet, dass** es ein Mobiltelefonendgerät ist.

9. Verfahren zur Sicherung einer elektronischen Vorrichtung (1), die mehrere Ausführungsumgebungen umfasst, von denen wenigstens eine eine sogenannte vertrauenswürdige Umgebung ist und wenigstens eine weitere eine sogenannte Mehrzweckumgebung ist,
wobei die vertrauenswürdige Umgebung mit Hilfe eines gesicherten Prozessors, der ein für diese Aufgabe bestimmter Prozessor sein kann oder andere Funktionen haben kann, und eines nichtflüchtigen, wiederbeschreibbaren gesicherten Speichers umgesetzt wird und auf einem vertrauenswürdigen Betriebssystem basiert,
wobei die Mehrzweckausführungsumgebung auf einem Mehrzweckbetriebssystem basiert, das ermöglicht, Anwendungen unterschiedlicher Herkünfte, wie dem Internet, auszuführen,
wobei das Verfahren einen Schritt zum Feststellen (E10) einer Sicherheitsanomalie des Mehrzweckbetriebssytems (100) sowie, als Reaktion auf den Feststellungsschritt, einen Schritt zur Deaktivierung (E11) wenigstens einer gesicherten Funktion der elektronischen Vorrichtung (1), welche durch Anwendungen des Mehrzweckbetriebssytems verwendet wird, umfasst, wobei der Deaktivierungsschritt jedoch die Verwendung der elektronischen Vorrichtung (1) in einem Notlauf ermöglicht, wobei das Verfahren **dadurch gekennzeichnet ist, dass** es in Abhängigkeit des vertrauenswürdigen Betriebssystems (200) durchgeführt wird, wobei das vertrauenswürdige Betriebssystem (200) und das Mehrzweckbetriebssystem (100) auf der elektronischen Vorrichtung ausgeführt werden,
wobei die wenigstens eine gesicherte Funktion:
eine Anwendung (APP₀, APP₁, APP₂) eines gesicherten Elements (20) ist, die durch die elektronische Vorrichtung (1), ausgeführt wird, oder
eine Funktion zum Zugreifen auf wenigstens ein sensibles Datenelement eines gesicherten Elements (20), beispielsweise kryptographische Schlüssel, ist, wobei das sensible Datenelement über die elektronische Vorrichtung (1) zugänglich ist.

10. Computerprogramm (PG), umfassend Befehle für die Durchführung des Verfahrens nach Anspruch 9, wenn das Programm durch einen Prozessor (300) ausgeführt wird.

11. Computerprogramm (PG) nach Anspruch 10, **dadurch gekennzeichnet, dass** es das vertrauenswürdige Betriebssystem darstellt.

12. Computerprogramm (PG) nach Anspruch 10, **dadurch gekennzeichnet, dass** es eine Erweiterung des vertrauenswürdigen Betriebssystems darstellt.

13. Computerprogramm (PG) nach Anspruch 10, **dadurch gekennzeichnet, dass** es eine Anwendung in Abhängigkeit des vertrauenswürdigen Betriebssystems darstellt.

14. Computerlesbarer Aufzeichnungsträger (500), auf dem ein Computerprogramm mit Befehlen für die Durchführung des Verfahrens nach Anspruch 9 gespeichert ist.

## Claims

1. An electronic assembly (10) for an electronic device (1), said electronic assembly (10) comprising several runtime environments at least one of which is called trusted environment and at least another of which is called versatile environment,
the trusted environment being implemented using a secure processor that can be a processor dedicated to this task or have other functions, and a secure rewritable non-volatile memory, and based on a trusted operating system,
the versatile runtime environment being based on a versatile operating system, allowing to run applications of various origins such as the internet,
and comprising:
a module for recognizing (210) a security anomaly of the versatile operating system (100); and
a module for deactivating (220), in response to said recognition, at least one secure function of said electronic device (1) used by applications of the versatile operating system;
said deactivation, however, allowing the use of said electronic device (1) in a degraded mode, said electronic assembly being **characterized in that** these two modules are run under the dependence of the trusted operating system, said trusted operating system (200) and said versatile operating system (100) being stored in a memory (500) of said electronic assembly running on said electronic assembly (10),
said at least one secure function being:
an application (APP₀, APP₁, APP₂) of a secure element (20), run by said electronic device (1); or
a function for accessing at least one sensitive data of a secure element (20), for example cryptographic keys, said sensitive data being accessible by said electronic device (1).

2. The electronic assembly (10) according to claim 1, **characterized in that** said security anomaly is the corruption of said versatile operating system (100).

3. The electronic assembly (10) according to any one of claims 1 to 2, **characterized in that** said recognition module (210) is able to receive a message containing a security command.

4. The electronic assembly (10) according to claim 1, **characterized in that** said deactivation module (220) is able to:
send an instruction for deactivating said application (App) to said application (App); and
wait for an acknowledgment of the deactivation of said application (App);
said trusted operating system taking the necessary measures to ensure the security of said electronic device when said acknowledgment is negative.

5. The electronic assembly (10) according to any one of claims 1 to 4, **characterized in that** said recognition module (210) is activated in response to the verification (E5) of the security of the electronic device (1), which is triggered:
at the initiative of said trusted operating system (200), at the start of said electronic device (1) or at regular intervals; or
at the initiative of a user of said electronic device (1).

6. The electronic assembly (10) according to claim 1, wherein the recognition module calculates on-the-fly the fingerprint of a specific series of bytes of each level of the operating system, then compares this fingerprint with a reference fingerprint.

7. A terminal (1) including an electronic assembly (10) according to any one of claims 1 to 7.

8. The terminal (1) according to claim 7, **characterized in that** it is a mobile telephone terminal.

9. A method for securing an electronic device (1) comprising several runtime environments at least one of which is called trusted environment and at least another of which is called versatile environment,
the trusted environment being implemented using a secure processor that can be a processor dedicated to this task, or have other functions, and a secure rewritable non-volatile memory, and based on a trusted operating system,
the versatile runtime environment is based on a versatile operating system, allowing to run applications of various origins such as the internet,
and comprising, said method comprising a step of recognizing (E10) a security anomaly of the versatile operating system (100) and, in response to said recognition step, a step of deactivating (E11) at least one secure function of said electronic device (1) used by applications of the versatile operating system, said deactivation step, however, allowing the use of said electronic device (1) in a degraded mode, said method being **characterized in that** it is implemented under the dependence of the trusted operating system (200), said trusted operating system (200) and said versatile operating system (100) running on said electronic device,
said at least one secure function being:
an application (App, App₁, App₂) of a secure element (20), run by said electronic device (1); or
a function for accessing at least one sensitive data of a secure element (20), for example cryptographic keys, said sensitive data being accessible by said electronic device (1).

10. A computer program (PG) including instructions for carrying out the method according to claim 9 when said program is run by a processor (300).

11. The computer program (PG) according to claim 10, **characterized in that** it constitutes said trusted operating system.

12. The computer program (PG) according to claim 10, **characterized in that** it constitutes an extension of said trusted operating system.

13. The computer program (PG) according to claim 10, **characterized in that** it constitutes an application under the dependence of said trusted operating system.

14. A computer-readable recording medium (500) on which a computer program is recorded, comprising instructions for carrying out the method according to claim 9.
